(19) **Europäisches Patentamt / European Patent Office / Office européen des brevets**

(11) **EP 1 081 514 B1**

(12) **FASCICULE DE BREVET EUROPEEN**

(45) Date de publication et mention
de la délivrance du brevet:
**02.05.2007 Bulletin 2007/18**

(51) Int Cl.:
***G02B 6/02*** (2006.01)

(21) Numéro de dépôt: **00402424.6**

(22) Date de dépôt: **01.09.2000**

(54) **Fibre optique pour la compensation de la dispersion chromatique d'une fibre optique à dispersion chromatique positive**

Optische Faser zur Kompensation der chromatischen Dispersion einer optischen Faser mit positiver chromatischer Dispersion

Optical fibre for compensating the chromatic dispersion of a positive chromatic dispersion optical fibre

(84) Etats contractants désignés:
**AT BE CH CY DE DK ES FI FR GB GR IE IT LI LU MC NL PT SE**

(30) Priorité: **02.09.1999 FR 9911009**

(43) Date de publication de la demande:
**07.03.2001 Bulletin 2001/10**

(73) Titulaire: **Draka Comteq B.V.**
**1018 TX Amsterdam (NL)**

(72) Inventeurs:
- **De Montmorillon, Louis-Anne**
  **75017 Paris (FR)**
- **Nouchi, Pascale**
  **78600 Maisons Lafitte (FR)**
- **Sillard, Pierre**
  **75014 Paris (FR)**
- **Fleury, Ludovic**
  **78390 Bois D'Arcy (FR)**

(74) Mandataire: **Blokland, Arie**
**Algemeen Octrooi- en Merkenbureau,**
**P.O. Box 645**
**5600 AP Eindhoven (NL)**

(56) Documents cités:
**EP-A- 0 940 697** **WO-A-99/42869**
**US-A- 5 838 867**

- **ONISHI M ET AL: "THIRD-ORDER DISPERSION COMPENSATING FIBRES FOR NON-ZERO DISPERSION SHIFTED FIBRE LINKS" ELECTRONICS LETTERS,GB,IEE STEVENAGE, vol. 32, no. 25, 5 décembre 1996 (1996-12-05), pages 2344-2345, XP000685332 ISSN: 0013-5194**
- **ARAI S ET AL: "LOW NONLINEAR DISPERSION-SHIFTED FIBER" OFC, OPTICAL FIBER COMMUNICATION CONFERENCE TECHNICAL DIGEST SERIES,US,WASHINGTON, DC, 16 février 1997 (1997-02-16), page 65 XP000783997**

**Description**

La présente invention concerne le domaine des transmissions par fibre optique.

Pour des fibres optiques, on qualifie généralement le profil d'indice en fonction de l'allure du graphe de la fonction qui associe au rayon de la fibre l'indice de réfraction. On représente de façon classique sur les abscisses la distance r au centre de la fibre, et sur les ordonnées la différence entre l'indice de réfraction et l'indice de réfraction de la gaine de la fibre. On parle ainsi de profil d'indice en "échelon", en "trapèze" ou en "triangle" pour des graphes qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent.

Dans les nouveaux réseaux de transmission à hauts débits et multiplexés en longueur d'onde, il est avantageux de gérer la dispersion chromatique, notamment pour des débits supérieurs ou égaux à 10 Gbit/s ; l'objectif est d'obtenir, pour toutes les valeurs de longueur d'onde du multiplex, une compensation chromatique cumulée sensiblement nulle sur la liaison, de manière à limiter l'élargissement des impulsions. Une valeur cumulée de quelques centaines de ps/nm pour la dispersion est en général acceptable. Il est aussi intéressant d'éviter au voisinage des longueurs d'onde utilisées dans le système les valeurs nulles de la dispersion chromatique, pour lesquelles les effets non-linéaires sont plus importants. Enfin, il est aussi intéressant de limiter la pente de dispersion chromatique sur la plage du multiplex de manière à éviter ou limiter les distorsions entre les canaux du multiplex.

On utilise classiquement comme fibre de ligne pour les systèmes de transmissions à fibres optiques des fibres à saut d'indice. La demanderesse commercialise ainsi sous référence ASMF 200 une fibre monomode à saut d'indice présentant une longueur d'onde $\lambda_0$ d'annulation de la dispersion chromatique entre 1300 et 1320 nm, et une dispersion chromatique inférieure ou égale à 3,5 ps/nm.km dans une plage de 1285-1330 nm, et de 17 ps/nm.km à 1550 nm. La pente de dispersion chromatique à 1550 nm est de l'ordre de 0,06 ps/nm$^2$.km.

Sont aussi apparues sur le marché des fibres à dispersion décalée, ou DSF (acronyme de l'anglais "Dispersion shifted fibers"). Ces fibres sont telles qu'à la longueur d'onde de transmission à laquelle elles sont utilisées, qui est en général différente de la longueur d'onde de 1,3 μm pour laquelle la dispersion de la silice est sensiblement nulle, la dispersion chromatique de l'onde transmise est sensiblement nulle. Dans ces fibres, l'écart d'indice Δn entre le coeur de la fibre et la gaine optique est augmenté par rapport aux fibres optiques à saut d'indice. Cet écart d'indice permet de décaler la longueur d'onde pour laquelle la dispersion chromatique est nulle vers la longueur d'onde de tranmission ; il est obtenu par l'introduction de dopants dans la préforme, lors de la fabrication de celle-ci, par exemple par un processus de MCVD connu en soi, et qui n'est pas décrit plus en détail ici.

On qualifie de NZ-DSF+ (non-zero dispersion shifted fibers en anglais) des fibres à dispersion décalée, présentant une dispersion chromatique non-nulle et positive pour les longueurs d'onde auxquelles elles sont utilisées. Ces fibres présentent pour ces longueurs d'onde une dispersion chromatique faible, typiquement inférieure à 10 ps/(nm.km) à 1550 nm, et une pente de dispersion chromatique entre 0,04 et 0,1 ps/(nm$^2$.km)

Pour compenser la dispersion chromatique et la pente de dispersion chromatique dans des fibres SMF ou NZ-DSF+ utilisées comme fibres de ligne, il est connu d'utiliser des faibles longueurs de fibre de compensation de dispersion ou DCF (Dispersion Compensating Fiber en anglais). L'article de Onishi et al "Third order dispersion compensating fibres for non-zero dispersion shifted fibre links" divulgue une fibre de compensation de la pente de dispersion ou DSCF (Dispersion Slope compensating Fiber en anglais). WO-A-99 42 869 propose une fibre de compensation avec une zone enterrée.

Des fibres DCF sont décrites dans différents brevets. Elles présentent au voisinage d'une longueur d'onde de 1550 nm une dispersion chromatique négative, pour compenser la dispersion chromatique cumulée dans la fibre de ligne, et peuvent en outre présenter une pente de la dispersion chromatique négative pour compenser la pente positive de la dispersion chromatique de la fibre en ligne.

Le document WO-A-99 13366 propose une fibre de compensation de dispersion, qui est destinée à être utilisée dans des boîtiers de compensation, pour compenser la dispersion chromatique et la pente de dispersion chromatique d'une fibre du type commercialisé par Lucent Technologies sous la marque "True Wave" ; la fibre « True Wave » présente une dispersion chromatique entre 1,5 et 4 ps/nm.km et une pente de dispersion chromatique de 0,07 ps/nm$^2$.km. Les fibres de compensation de dispersion proposées présentent entre 1530 et 1610 nm une dispersion chromatique inférieure à -6 ps/nm.km, une pente de la dispersion chromatique inférieure à -0,6 ps/nm$^2$.km et un rapport entre ces deux valeurs inférieur à 160. Pour compenser la dispersion dans la fibre de ligne, on utilise la fibre de compensation de dispersion, dans un boîtier de compensation, en une longueur qui est 15 fois plus faible que la longueur de la fibre de ligne.

La demande de brevet français déposée le 18.02.99 sous le numéro 9902028, publiée sous le numéro FR-2 790 107 et intitulée "Fibre de ligne pour systèmes de transmission à fibre optique à multiplexage en longueurs d'onde" propose une fibre de ligne, tout particulièrement adaptée à une transmission à multiplexage en longueurs d'onde dense, avec un espacement entre les canaux de 100 GHz ou moins pour un débit par canal de 10 Gbit/s ; cette fibre présente pour une longueur d'onde de 1550 nm une aire effective supérieure ou égale à 60 μm$^2$, une dispersion chromatique

comprise entre 6 et 10 ps/nm.km ; et une pente de dispersion chromatique inférieure à 0,07 ps/nm$^2$.km.

Parmi les fibres du document WO-A-99 13366, et notamment parmi celles décrites dans les exemples de ce document, rien ne conduit à celles qui offrent le meilleur compromis pour compenser la dispersion chromatique et la pente de la dispersion chromatique des fibres NZ-DSF, et notamment de celles décrites dans le document FR-2 790 107. En d'autres termes, il n'est pas possible de déterminer dans le document WO-A-99 13366 les fibres de compensation de dispersion qui offrent le meilleur compromis entre les pertes par courbure, la surface effective (pour éviter les effets non linéaires), la dispersion chromatique et la pente de la dispersion chromatique.

L'invention propose une fibre adaptée à la compensation en ligne de la dispersion chromatique dans une fibre à dispersion décalée, et plus précisément dans une fibre NZ-DSF+, notamment dans une fibre du type décrit dans le document FR-2 790 107. Elle fournit une fibre qui présente de faibles pertes par courbures, et peut être utilisée facilement comme fibre de ligne dans un système de transmission

Plus précisément, l'invention propose une fibre optique selon la revendication 1.

La longueur d'onde de coupure théorique est la longueur d'onde calculée au-delà de laquelle seul le mode fondamental peut se propager (on peut se reporter pour plus de précisions à l'ouvrage de L.B. Jeunhomme intitulé « Single-Mode Fiber Optics, principles and applications », édition de 1990, pages 39 à 44).

Le choix de la longueur d'onde de coupure théorique au-delà de 1,1 $\mu$m permet d'obtenir le compromis recherché.

Dans un mode de réalisation préféré, la fibre présente pour une longueur d'onde de 1550 nm une dispersion chromatique supérieure ou égale à -20 ps/nm.km.

Dans un autre mode de réalisation préféré, la fibre présente pour une longueur d'onde de 1550 nm une dispersion chromatique inférieure ou égale à -5 ps/nm.km.

Dans un autre mode de réalisation préféré, la fibre présente pour une longueur d'onde de 1550 nm un rapport entre la dispersion chromatique et la pente de dispersion chromatique inférieur à 200 nm, de préférence inférieur à 180 nm, et de préférence encore inférieur à 160 nm.

Dans un autre mode de réalisation préféré, la fibre présente pour une longueur d'onde de 1550 nm un rapport entre la dispersion chromatique et la pente de dispersion chromatique supérieur à 80 nm, de préférence supérieur à 100 nm et de préférence encore supérieur à 120 nm.

Dans un autre mode de réalisation préféré, la fibre présente pour une longueur d'onde de 1550 nm une surface effective supérieure ou égale à 15 $\mu$m$^2$, de préférence supérieure ou égale à 20 $\mu$m$^2$.

Dans un autre mode de réalisation préféré, la fibre présente pour une longueur d'onde de 1550 nm une atténuation inférieure ou égale à 1 dB/km, et de préférence inférieure ou égale à 0,3 dB/km.

Dans un autre mode de réalisation préféré, la fibre présente pour une longueur d'onde de 1550 nm un diamètre de mode supérieur ou égal à 4 $\mu$m, et de préférence supérieur ou égal à 5 $\mu$m

Dans un autre mode de réalisation préféré, la fibre présente pour une longueur d'onde de 1550 nm une sensibilité aux micro-courbures inférieure ou égale à 1, et de préférence inférieure ou égale à 0,5.

Dans un autre mode de réalisation préféré, la fibre présente une longueur d'onde de coupure théorique supérieure ou égale à 1,3$\mu$m.

Dans un autre mode de réalisation préféré, la fibre présente une longueur d'onde de coupure en câble inférieure ou égale à 1,3 $\mu$m.

La longueur d'onde de coupure en câble est la longueur d'onde de coupure mesurée sur une fibre de 20 m de longueur (pour plus de détails, on peut se reporter à la norme EIA/TIA-455-170).

Dans un autre mode de réalisation préféré, la fibre présente pour des longueurs d'onde entre 1300 et 1620 nm des pertes par courbures inférieures à 0,05 dB, et de préférence inférieures à 5.10$^{-3}$ dB, pour un enroulement de 100 tours avec un rayon de 30 mm.

Dans un autre mode de réalisation préféré, la différence entre l'indice en tout point de la fibre et l'indice de la gaine est inférieure ou égale à 28.10$^{-3}$, et de préférence inférieure ou égale à 20.10$^{-3}$.

L'invention propose également l'utilisation d'une fibre selon l'invention comme fibre de compensation de dispersion dans un système de transmission à fibre optique à multiplexage en longueur d'onde. De préférence, la fibre de compensation est câblée et utilisée comme fibre de ligne.

Par ailleurs, l'invention propose un système de transmission à fibre optique à multiplexage en longueur d'onde, comprenant une première section de fibre de ligne, et une deuxième section de fibre de ligne selon l'invention.

Dans un mode de réalisation préféré, la fibre de ligne de la première section présente pour une longueur d'onde de 1550 nm une dispersion chromatique entre 5 et 1 1 ps/nm.km.

Dans un autre mode de réalisation préféré, la fibre de ligne de la première section présente pour une longueur d'onde de 1550 nm une pente de dispersion chromatique inférieure ou égale à 0,08 ps/nm$^2$.km.

Dans un autre mode de réalisation préféré, le rapport de la longueur de la première section-à la longueur de la seconde section est sensiblement l'inverse de la - valeur absolue du rapport des dispersions chromatiques à 1550 nm des fibres de la première section et de la deuxième section.

# EP 1 081 514 B1

Dans un autre mode de réalisation préféré, la dispersion chromatique cumulée pour chaque canal entre 1530 et 1620 nm est inférieure à 100 ps/nm, et de préférence inférieure à 50 ps/nm, en moyenne sur 100 km de transmission.

D'autres caractéristiques et avantages de l'invention apparaîtront à la lecture de la description qui suit de modes de réalisation de l'invention, donnés à titre d'exemple et en référence aux dessins annexés, qui montrent :

- figure 1, une représentation schématique du profil d'indice de consigne d'une fibre de compensation de dispersion selon l'invention
- figure 2, une représentation schématique du profil d'indice de consigne d'une fibre de compensation de dispersion selon un deuxième mode de réalisation de l'invention
- figure 3, une représentation schématique d'une section d'un système de transmission utilisant de la fibre de compensation de dispersion selon l'invention. ,

Les caractéristiques préférées des fibres selon l'invention sont les suivantes:

- dispersion chromatique à 1550 nm négative et supérieure ou égale à -40 ps/nm.km, et de préférence comprise entre -5 et -20 ps/nm.km
- rapport entre la dispersion chromatique et la pente de dispersion chromatique à 1550 nm compris entre 50 et 230 nm, et de préférence entre 80 et 200 nm, voire entre 100 et 180 nm, voire encore entre 120 et 160 nm surface effective à 1550 nm supérieure ou égale à 10 $\mu m^2$, voire 15 $\mu m^2$, ou de préférence 20 $\mu m^2$
- sensibilité aux micro-courbures à 1550 nm inférieure ou égale à 1, ou de préférence inférieure ou égale à 0,5
- pertes par courbure dans la plage d'utilisation (1300-1620nm) inférieures ou égales à 0,05 dB, et de préférence inférieures à $5.10^{-3}$ dB pour 100 tours avec un rayon de 30 mm
- longueur d'onde de coupure théorique supérieure ou égale à 1,1$\mu$m et de préférence à 1,3$\mu$m
- longueur d'onde de coupure en câble de préférence inférieure ou égale à 1,3 $\mu$m
- diamètre de mode à 1550 nm supérieur à 4 $\mu$m, et de préférence supérieur à 5 $\mu$m.

Les choix préférés de la longueur d'onde de coupure théorique et de la longueur d'onde de coupure en câble assurent que, dans la plage de longueur d'onde allant de 1300 à 1620 nm, la fibre est monomode, présente un bon comportement en courbure, a la surface effective la plus élevée possible pour éviter les effets non linéaires et a un coeur le moins dopé possible pour limiter les problèmes d'atténuation. Le choix de la longueur d'onde de coupure conduit donc à un meilleur compromis, par rapport notamment aux fibres décrites dans le document WO-A-99 13366.

Les autres caractéristiques préférées de la fibre améliorent la capacité à utiliser la fibre de l'invention pour la compensation en ligne de la fibre proposée dans la demande française FR-2 790 107 précitée, ou de fibres de même type. La fibre de l'invention est particulièrement adaptée aux fibres présentant une dispersion chromatique entre 5 et 1 1 ps/nm.km, et une pente de dispersion chromatique inférieure à 0,08 ps/nm$^2$.km.

La fibre de l'invention permet de constituer des systèmes de transmission à très haut débit, en multiplexage en longueurs d'onde, et permet par exemple d'atteindre des débits de N x 20 Gb/s, ou de N x 40 Gb/s.

De façon connue en soi, les pertes par courbure sont évaluées en mesurant les pertes induites dans une fibre par l'enroulement de 100 tours de la fibre autour d'un tambour de rayon 30 mm. La sensibilité aux micro-courbures est évaluée de façon relative, par rapport à la fibre commercialisée par la demanderesse sous la référence ASMF 200; on peut employer la méthode d'écrasement de la fibre entre deux grilles, connue en soi.

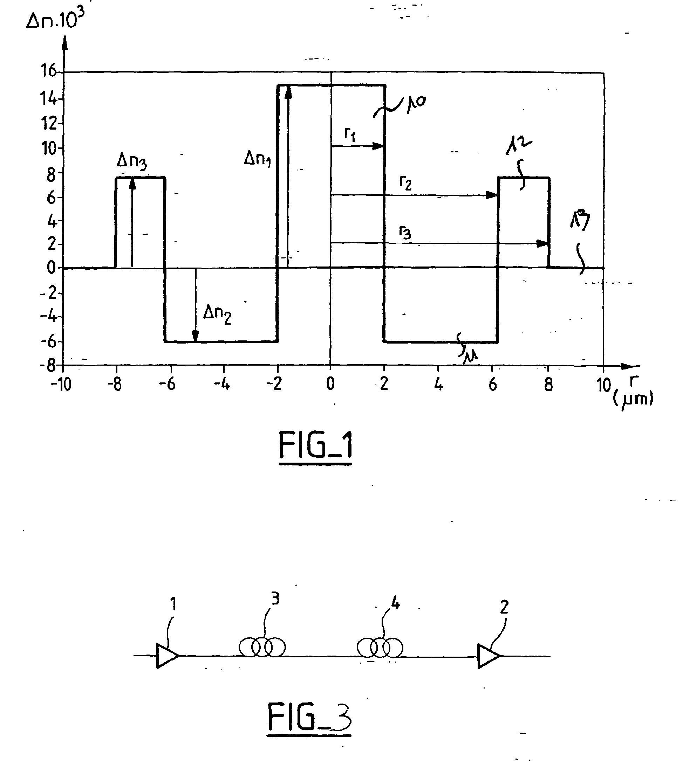

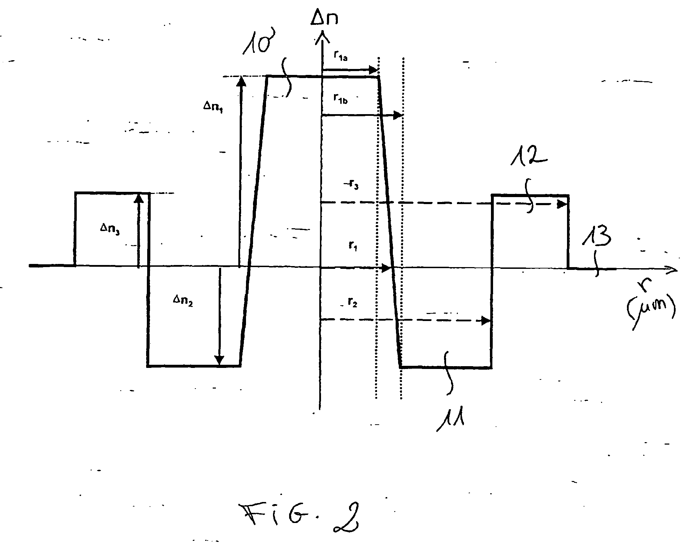

On donne dans la suite de la description en référence à la figure 1 des exemples de profils de fibre permettant d'obtenir de telles valeurs. Les fibres données à titre d'exemple présentent toutes un profil de consigne du genre de celui de la figure 1, et varient par les valeurs numériques des rayons et des indices. La figure 1 montre donc une représentation schématique du profil d'indice de consigne d'une fibre selon l'invention.

Le profil d'indice est un profil d'indice du type en rectangle, avec une zone enterrée et un anneau, qui présente, en partant du centre de la fibre :

- une partie centrale 10 de rayon $r_1$ avec un indice sensiblement constant supérieur ou égal à l'indice de la gaine, ayant de préférence une différence d'indice $\Delta n_1$ avec la gaine 13 inférieure à $28.10^{-3}$ ; une faible valeur de cette différence d'indice facilite l'obtention de fibres ayant de faibles atténuations
- une zone enterrée ou déprimée 11 de rayon $r_2$, d'indice inférieur ou égal à l'indice de la gaine 13, ayant de préférence une différence d'indice $\Delta n_2$ avec la gaine 13 supérieure à $-8.10^{-3}$ ; une telle valeur minimale de la différence d'indice facilite la fabrication de la fibre
- un anneau 12 de rayon $r_3$, c'est-à-dire une partie d'indice supérieur à l'indice de la gaine 13, d'où le qualificatif de profil en rectangle avec une zone enterrée et un anneau.

Autour de l'anneau s'étend la gaine 13 de la fibre, par rapport à laquelle sont mesurées les différences d'indice.

EP 1 081 514 B1

Les valeurs d'indices et de rayons des fibres sont données dans le tableau 1 qui suit, pour sept exemples de réalisation de fibre selon l'invention. On note $r_1$, $r_2$ et $r_3$ les rayons extérieurs respectifs de la partie centrale 10, de la zone déprimée 11, et de l'anneau 12. Ces rayons sont donnés en micromètres dans le tableau 1. On note $\Delta n_1$, $\Delta n_2$ et $\Delta n_3$ les différences respectives entre l'indice de la partie centrale 10, de la zone déprimée 11, et de l'anneau 12 et l'indice de la gaine 13 de la fibre.

Tableau 1

| N° | $r_1$ | $r_2$ | $r_3$ | $10^3.\Delta n_1$ | $10^3.\Delta n_2$ | $10^3.\Delta n_3$ |
|---|---|---|---|---|---|---|
| 1 | 2,01 | 6,20 | 8,05 | 14,9 | -6,2 | 7,5 |
| 2 | 2,42 | 5,76 | 8,35 | 12,1 | -6,8 | 5,0 |
| 3 | 2,12 | 5,78 | 7,05 | 14,6 | -8,0 | 8,0 |
| 4. | 2,70 | 5,92 | 8,45 | 10,4 | -6,1 | 4,8 |
| 5 | 2,38 | 5,69 | 7,20 | 12,4 | -7,1 | 5,6 |
| 6 | 2,59 | 5,53 | 8,64 | 10,8 | -5,9 | 4,0 |
| 7 | 2,29 | 6,16 | 8,80 | 13,1 | -8,0 | 5,0 |

Le profil de la figure 1, associé aux valeurs du tableau 1, permet d'obtenir une fibre présentant les caractéristiques données dans le tableau 2 qui suit. On note dans ce tableau $\lambda_{cth}$ la longueur d'onde de coupure théorique de la fibre. Dans la pratique, la longueur d'onde de coupure effective selon la norme UIT-T G650 et la longueur d'onde mesurée sur câble sont inférieures de quelques centaines de nm ; on comprend que la fibre est effectivement monomode dans la plage de longueurs d'onde des signaux utiles, par exemple de 1300 à 1620nm.

On note $A_{eff}$ la surface effective, C la dispersion chromatique mesurée à 1550 nm et exprimée en ps/nm.km, $dC/d\lambda$ la pente de dispersion chromatique mesurée à 1550 nm et exprimée en ps/nm$^2$.km, $C/(dC/d\lambda)$ le rapport entre ces deux quantités, $2W_{02}$ le diamètre de mode à 1550 nm, PC les pertes par courbures évaluées comme expliqué ci-dessus, et $S_{\mu c}$ la sensibilité aux microcourbures mesurée comme expliqué ci-dessus à 1550 nm.

Tableau 2

| N° | $\lambda_{dh}$ (nm) | $A_{eff}$ ($\mu m^2$) | C (ps/nm/k m) | $dC/d\lambda$ (ps/nm2/ κµ) | $C/(dC/d\lambda)$ (nm) | $2W_{02}$ ($\mu m$) | PC @1550 nm (dB) | PC @1620 nm (dB) | $S_{\mu c}$ |
|---|---|---|---|---|---|---|---|---|---|
| 1 | 1788 | 21,8 | -33,2 | -0,243 | 137 | 5,26 | $<10^{-5}$ | $7.10^{-3}$ | 0,3 |
| 2 | 1783 | 26,7 | -16,7 | -0,121 | 138 | 5,78 | $<10^{-5}$ | $<5.10^{-3}$ | 0,29 |
| 3 | 1626 | 20,3 | -15,8 | -0,113 | 140 | 5,09 | $<10^{-5}$ | $<5.10^{-3}$ | 0,21 |
| 4 | 1781 | 32,0 | -8,4 | -0,059 | 142 | 6,32 | $<10^{-5}$ | $<5.10^{-3}$ | 0,35 |
| 5 | 1547 | 24,6 | -8,6 | -0,061 | 141 | 5,59 | $<10^{-5}$ | $<5.10^{-3}$ | 0,26 |
| 6 | 1771 | 32,4 | -16,1 | -0,072 | 224 | 6,34 | $<10^{-5}$ | $<5.10^{-3}$ | 0,4 |
| 7 | 1788 | 22,4 | -12,7 | -0,157 | 81 | 5,32 | $<10^{-5}$ | $2.10^{-2}$ | 0,31 |

Les pertes par courbure restent inférieures à $5.10^{-2}$ dB pour 100 tours de fibre autour d'une bobine de rayon 30 mm dans toute la plage utile pour la fibre , i.e. de 1300 à 1620 nm.

Dans tous les exemples du tableau 1, des variations de 5 % de l'indice $\Delta n_1$ de la partie centrale 10, ou de 10% des indices $\Delta n_2$ et $\Delta n_3$ de la zone enterrée 11 et de l'anneau 12 permettent d'obtenir des résultats similaires. Il en est de même des rayons, qui peuvent varier individuellement de 5% par rapport aux valeurs données dans l'exemple des figures, tout en obtenant des résultats analogues.

Dans tous les cas, quelle que soit la forme du profil d'indice , les variations d'indice par rapport à la gaine 13 sont comprises en $-8.10^{-3}$ et $28.10^{-3}$; ces choix assurent que la fabrication de la fibre reste simple, et que les atténuations sont limitées. On peut de façon préférée imposer que la différence d'indice avec l'indice de la gaine 13 soit en tout point inférieure à $20.10^{-3}$.

Plus généralement, en faisant varier les paramètres suivants dans les fourchettes indiquées ci-après, on obtient des fibres ayant les caractéristiques de l'invention et le profil de consigne représenté à la figure 1 :

$$10.10^{-3} \leq \Delta n_1 \leq 16.10^{-3} \text{ et } 1,85 \, \mu m \leq r_1 \leq 2,85 \, \mu m$$

et de préférence :

$$-8.10^{-3} \leq \Delta n_2 \leq -4.10^{-3} \text{ et } 4,8 \, \mu m \leq r_2 \leq 7,25 \, \mu m$$

et de préférence encore :

$$2.10^{-3} \leq \Delta n_3 \leq 8.10^{-3} \text{ et } 6,6 \, \mu m \leq r_3 \leq 9,5 \, \mu m.$$

En outre, les profils optimisés pour obtenir les caractéristiques de l'invention vérifient les relations suivantes, où S est défini par $S = 2x \int_0^{r_1} \Delta n(r) \cdot r dr$ :

$$55,6.10^{-3} \, \mu m^2 \leq S \leq 84,6.10^{-3} \, \mu m^2$$

$$-319.10^{-3} \, \mu m^2 \leq (r_2)^2 x \Delta n_2 \leq -157.10^{-3} \, \mu m^2$$

$$6,9.10^{-3} \, \mu m \leq (r_3 - r_2) x \Delta n_3 \leq 14,75.10^{-3}$$

La figure 2 montre une représentation schématique du profil d'indice de consigne d'une fibre selon un deuxième mode réalisation de l'invention. Le profil d'indice est un profil d'indice du type en trapèze, avec une zone enterrée et un anneau. La seule différence entre ce profil et celui représenté en figure 1 réside dans le fait que la partie centrale 10' a une forme de trapèze et non de rectangle, avec un rayon minimum $r_{1a}$, un rayon maximum $r_{1b}$ et un rayon $r_1$ correspondant au rayon de la partie centrale au point où elle croise l'axe des abscisses.

Les paramètres et caractéristiques d'une fibre selon l'invention présentant un profil du type de celui de la figure 2 sont donnés dans les Tableaux 3 et 4 ci-après.

Tableau 3

| $r_{1a}/r_{1b}$ | $r_1$ | $r_2$ | $r_3$ | $10^3.\Delta n_1$ | $10^3.\Delta n_2$ | $10^3.\Delta n_3$ |
|---|---|---|---|---|---|---|
| 0,7 | 2,48 | 5,88 | 8,4 | 13 | -7 | 5 |

Tableau 4

| $\lambda_{dh}$ (nm) | $A_{eff}$ ($\mu m^2$) | C (ps/nm/km) | $dC/d\lambda$ (ps/nm2/km) | $C/(dC/d\lambda)$ (nm) | $2W_{02}$ ($\mu m$) | PC @1550 nm (dB) | PC @1620 nm (dB) | $S_{\mu c}$ |
|---|---|---|---|---|---|---|---|---|
| 1788 | 24,4 | -12,4 | -0,102 | 122 | 5,58 | $<10^{-5}$ | $1.10^{-4}$ | 0,19 |

Les plages de paramètres définies ci-dessus s'appliquent également au profil d'indice de la figure 2 (en prenant pour $r_1$ la nouvelle définition donnée ci-dessus). A ces plages s'ajoute une plage permettant de définir le rapport $r_{1a}/r_{1b}$ :

$$0,6 \leq r_{1a}/r_{1b} \leq 1.$$

La figure 3 montre une représentation schématique d'une partie d'un système de transmission, dans lequel on utilise de la fibre de compensation selon l'invention en tant que fibre de ligne. On a représenté à la figure 3 deux amplificateurs 1 et 2 voisins du système de transmission; entre les deux amplificateurs, la fibre de ligne est constituée d'une section 3 de fibre du type de celle de la demande de brevet français précitée, et d'une deuxième section 4 de fibre selon l'invention. La fibre de la première section présente une dispersion chromatique à 1550 nm de 8 ps/nm.km, et une pente de dispersion chromatique à la même longueur d'onde de 0,058 $ps/nm^2$.km. A titre d'exemple, l'utilisation dans la deuxième section d'une fibre de compensation de dispersion selon le mode de réalisation N˚2 décrit dans les tableaux 1 et 2 permet de compenser sur la plage de longueurs d'onde du multiplex la dispersion chromatique cumulée dans la première section de fibre. Dans ce cas, la fibre de compensation de dispersion présente un rapport entre la dispersion chromatique et la pente de dispersion chromatique de 138 nm, la fibre de ligne de la première section présente un rapport entre la dispersion chromatique et la pente de dispersion chromatique de 138 nm.

Le rapport des longueurs respectives des fibres de la première et de la deuxième section est choisi de manière à minimiser la dispersion chromatique cumulée sur la liaison, et dans l'exemple, peut être de l'ordre de 2, i. e. voisin de l'inverse du rapport des dispersions chromatiques.

Dans un tel cas, pour une première section de fibre d'une longueur de 68 km, et une deuxième section de fibre de compensation de 32 km, la dispersion chromatique cumulée pour le canal à 1550 nm du multiplex est proche de 0 ps/nm.

Dans la plage du multiplex, c'est-à-dire entre 1530 et 1620 nm, la dispersion chromatique cumulée est inférieure à 50 ps/nm pour chaque canal, pour les 100 km des première et deuxième sections. On arrive de la sorte à limiter la dispersion chromatique cumulée à des valeurs inférieures à 100 ps/nm, pour chaque canal, en moyenne sur 100 km, comme indiqué plus haut.

Les fibres de l'invention peuvent être fabriquées par l'homme du métier à l'aide de techniques connues, comme le MCVD ou les autres techniques couramment utilisées pour la fabrication des fibres optiques.

Bien entendu, la présente invention n'est pas limitée aux exemples et modes de réalisation décrits et représentés, mais elle est susceptible de nombreuses variantes accessibles à l'homme de l'art. Il est clair que les profils des figures 1 et 2 et les exemples de rayons et d'indices ne sont donnés qu'à titre d'exemple, et que d'autres profils peuvent permettre d'obtenir des fibres présentant les caractéristiques de l'invention. Les fibres de l'invention peuvent être utilisées comme dans le mode de réalisation de la figure 3 dans un système de transmission à répéteurs, mais aussi dans un système de transmission sans répéteurs.

## Revendications

1.  Fibre optique comportant un coeur entouré d'une gaine optique, ledit coeur présentant un profil d'indice avec une zone déprimée et un anneau, présentant pour une longueur d'onde de 1550 nm une dispersion chromatique négative et supérieure à -40 ps/nm.km, des pertes par courbure inférieures ou égales à 0,05 dB une surface effective supérieure ou égale à 10 $\mu m^2$, une longueur d'onde de coupure théorique supérieure ou égale à 1.1 $\mu m$ et un rapport entre la dispersion chromatique et la pente de dispersion chromatique compris entre 50 et 230 nm, comprenant:

    - une partie centrale (10,10') de rayon $r_1$ d'indice supérieur ou égal à l'indice de ladite gaine (13), ayant une différence d'indice maximal $\Delta n_1$ avec ladite gaine (13),
    - une zone enterrée ou déprimée (11) de rayon $r_2$, d'indice inférieur ou égal à l'indice de ladite gaine (13), ayant une différence d'indice $\Delta n_2$ avec ladite gaine (13),
    - un anneau (12) de rayon $r_3$, d'indice supérieur à l'indice de ladite gaine (13), ayant une différence d'indice maximale $\Delta n_3$ avec ladite gaine (13),

    **caractérisée en ce que** $10.10^{-3} \leq \Delta n_1 \leq 16.10^{-3}$ et $1,85\ \mu m \leq r_1 \leq 2,85\ \mu m$, $-8.10^{-3} \leq \Delta n_2 \leq -4.10^{-3}$ et $4,8\ \mu m \leq r_2 \leq 7,25\ \mu m$, $2.10^{-3} \leq \Delta n_3 \leq 8.10^{-3}$ et $6,6\ \mu m \leq r_3 \leq 9,5\ \mu m$.

2.  Fibre selon la revendication 1, **caractérisée en ce qu'**elle présente pour une longueur d'onde de 1550 nm une dispersion chromatique supérieure ou égale à -20 ps/nm.km.

3.  Fibre selon l'une des revendications 1 ou 2, **caractérisée en ce qu'**elle présente pour une longueur d'onde de 1550 nm une dispersion chromatique inférieure ou égale à -5 ps/nm.km.

4.  Fibre selon l'une des revendications 1 à 3, **caractérisée en ce qu'**elle présente pour une longueur d'onde de 1550 nm un rapport entre la dispersion chromatique et la pente de dispersion chromatique inférieur à 200 nm, et de préférence inférieur à 180 nm.

5. Fibre selon la revendication 4, **caractérisée en ce qu'**elle présente pour une longueur d'onde de 1550 nm un rapport entre la dispersion chromatique et la pente de dispersion chromatique inférieur à 160 nm.

6. La fibre selon l'une des revendications 1 à 5, **caractérisée en ce qu'**elle présente pour une longueur d'onde de 1550 nm un rapport entre la dispersion chromatique et la pente de dispersion chromatique supérieur à 80 nm , et de préférence supérieur à 100 nm.

7. Fibre selon la revendication 6, **caractérisée en ce qu'**elle présente pour une longueur d'onde de 1550 nm un rapport entre la dispersion chromatique et la pente de dispersion chromatique supérieur à 120 nm.

8. Fibre selon l'une des revendications 1 à 7, **caractérisée en ce qu'**elle présente pour une longueur d'onde de 1550 nm une surface effective supérieure ou égale à 15 $\mu$m$^2$, de préférence supérieure ou égale à 20 $\mu$m$^2$.

9. Fibre selon l'une des revendications 1 à 8, **caractérisée en ce qu'**elle présente pour une longueur d'onde de 1550 nm une atténuation inférieure ou égale à 1 dB/km, et de préférence inférieure ou égale à 0,3 dB/km.

10. Fibre selon l'une des revendications 1 à 9, **caractérisée en ce qu'**elle présente pour une longueur d'onde de 1550 nm un diamètre de mode supérieur ou égal à 4 $\mu$m, et de préférence supérieur ou égal à 5 $\mu$m.

11. Fibre selon l'une des revendications 1 à 10, **caractérisée en ce qu'**elle présente pour une longueur d'onde de 1550 nm une sensibilité aux micocourbures inférieure ou égale à 1, et de préférence inférieure ou égale à 0,5.

12. Fibre selon l'une des revendications 1 à 11, **caractérisée en ce qu'**elle présente une longueur d'onde de coupure théorique supérieure ou égale à 1,3 $\mu$m.

13. Fibre selon l'une des revendications 1 à 12, **caractérisée en ce qu'**elle présente une longueur d'onde de coupure en câble inférieure ou égale à 1,3 $\mu$m.

14. Fibre selon l'une des revendications 1 à 13, **caractérisée en ce qu'**elle présente pour des longueurs d'onde entre 1300 et 1620 nm des pertes par courbures inférieures à 0,05 dB, et de préférence inférieures à 5.10$^{-3}$ dB.

15. Fibre selon l'une des revendications 1 à 14, **caractérisée en ce que** la différence entre l'indice en tout point de la fibre et l'indice de la gaine est supérieure ou égale à -8.10$^{-3}$.

16. Fibre selon l'une des revendications 1 à 15, **caractérisée en ce que** la différence entre l'indice en tout point de la fibre et l'indice de la gaine est inférieure ou égale à 28.10$^{-3}$, et de préférence inférieure ou égale à 20.10$^{-3}$.

17. Fibre selon la revendication 1 **caractérisée en ce que** ladite partie centrale (10), de rayon $r_1$, a la forme d'un rectangle, et **en ce que** sa différence d'indice $\Delta n_1$ avec ladite gaine (13) est sensiblement constante.

18. Fibre selon la revendication 1 **caractérisée en ce que** ladite partie centrale (10') a la forme d'un trapèze, de rayon minimum $r_{1a}$, de rayon maximum $r_{1b}$ et dont le rayon au point où elle croise l'axe des abscisses est noté $r_1$.

19. Fibre selon la revendication 1 **caractérisée en ce que**, S étant défini par : $S = 2x \int_0^{r_1} \Delta n(r) \cdot r\,dr$ , elle vérifie les relations suivantes :

$$55{,}6.10^{-3}\,\mu m^2 \leq S \leq 84{,}6.10^{-3}\,\mu m^2$$

$$-319.10^{-3}\,\mu m^2 \leq (r_2)^2 x \Delta n_2 \leq -157.10^{-3}\,\mu m^2$$

$$6{,}9.10^{-3}\,\mu m \leq (r_3-r_2)\times\Delta n_3 \leq 14{,}75.10^{-3}$$

**20.** Utilisation d'une fibre selon l'une des revendications 1 à 19 comme fibre de compensation de dispersion dans un système de transmission à fibre optique à multiplexage en longueur d'onde.

**21.** Utilisation selon la revendication 20, la fibre de compensation étant câblée et utilisée comme fibre de ligne.

**22.** Système de transmission à fibre optique à multiplexage en longueur d'onde, comprenant une première section (3) de fibre de ligne, et une deuxième section (4) de fibre de ligne selon l'une des revendications 1 à 19.

**23.** Système selon la revendication 22, **caractérisé en ce que** la fibre de ligne de la première section présente pour une longueur d'onde de 1550 nm une dispersion chromatique entre 5 et 11 ps/nm.km.

**24.** Système selon l'une des revendications 22 ou 23, **caractérisé en ce que** la fibre de ligne de la première section présente pour une longueur d'onde de 1550 nm une pente de dispersion chromatique inférieure ou égale à 0,08 ps/nm$^2$.km.

**25.** Système selon l'une des revendications 22 à 24, **caractérisé en ce que** le rapport de la longueur de la première section à la longueur de la seconde section est sensiblement l'inverse de la valeur absolue du rapport des dispersions chromatiques à 1550 nm des fibres de la première section et de la deuxième section.

**26.** Système selon l'une des revendications 22 à 25, **caractérisé en ce que** la dispersion chromatique cumulée pour chaque canal entre 1530 et 1620 nm est inférieure à 100 ps/nm, et de préférence inférieure à 50 ps/nm, en moyenne sur 100 km de transmission.

**Claims**

**1.** Optical fibre comprising a core surrounded by an optical cladding, which core has an index profile with a depressed zone and a ring, and having, for a wavelength of 1550 nm, a chromatic dispersion which is negative and greater than -40 ps/nm.km, bending losses less than or equal to 0.05 dB, an effective surface area greater than or equal to 10 $\mu m^2$, a theoretical cut-off wavelength greater than or equal to 1.1 $\mu m$ and a ratio between the chromatic dispersion and the chromatic dispersion slope between 50 and 230 nm, inclusive, comprising:

- a central portion (10, 10') of radius $r_1$ having an index greater than or equal to the index of said cladding (13) and having a difference in maximum index $\Delta n_1$ from said cladding (13),
- a buried or depressed zone (11) of radius $r_2$ having an index less than or equal to the index of said cladding (13) and having a difference in index $\Delta n_2$ from said cladding (13),
- a ring (12) of radius $r_3$ having an index greater than the index of said cladding (13) and having a difference in maximum index $\Delta n_3$ from said cladding (13),

**characterised in that** $10 \times 10^{-3} \leq \Delta n_1 \leq 16 \times 10^{-3}$ and $1.85\ \mu m \leq r_1 < 2.85\ \mu m$, $-8 \times 10^{-3} \leq \Delta n_2 \leq -4 \times 10^{-3}$ and $4.8\ \mu m \leq r_2 \leq 7.25\ \mu m$, $2 \times 10^{-3} \leq \Delta n_3 \leq 8 \times 10^{-3}$ and $6.6\ \mu m \leq r_3 \leq 9.5\ \mu m$.

**2.** Fibre according to claim 1, **characterised in that** it has, for a wavelength of 1550 nm, a chromatic dispersion greater than or equal to -20 ps/nm.km.

**3.** Fibre according to one of claims 1 or 2, **characterised in that** it has, for a wavelength of 1550 nm, a chromatic dispersion less than or equal to -5 ps/nm.km.

**4.** Fibre according to one of claims 1 to 3, **characterised in that** it has, for a wavelength of 1550 nm, a ratio between the chromatic dispersion and the chromatic dispersion slope less than 200 nm, and preferably less than 180 nm.

**5.** Fibre according to claim 4, **characterised in that** it has, for a wavelength of 1550 nm, a ratio between the chromatic dispersion and the chromatic dispersion slope less than 160 nm.

**6.** The fibre according to one of claims 1 to 5, **characterised in that** it has, for a wavelength of 1550 nm, a ratio between the chromatic dispersion and the chromatic dispersion slope greater than 80 nm, and preferably greater than 100 nm.

**7.** Fibre according to claim 6, **characterised in that** it has, for a wavelength of 1550 nm, a ratio between the chromatic dispersion and the chromatic dispersion slope greater than 120 nm.

**8.** Fibre according to one of claims 1 to 7, **characterised in that** it has, for a wavelength of 1550 nm, an effective surface area greater than or equal to 15 $\mu m^2$, preferably greater than or equal to 20 $\mu m^2$.

**9.** Fibre according to one of claims 1 to 8, **characterised in that** it has, for a wavelength of 1550 nm, an attenuation less than or equal to 1 dB/km, and preferably less than or equal to 0.3 dB/km.

**10.** Fibre according to one of claims 1 to 9, **characterised in that** it has, for a wavelength of 1550 nm, a mode diameter greater than or equal to 4 $\mu m$, and preferably greater than or equal to 5 $\mu m$.

**11.** Fibre according to one of claims 1 to 10, **characterised in that** it has, for a wavelength of 1550 nm, a sensitivity to microbending less than or equal to 1, and preferably less than or equal to 0.5.

**12.** Fibre according to one of claims 1 to 11, **characterised in that** it has a theoretical cut-off wavelength greater than or equal to 1.3 $\mu m$.

**13.** Fibre according to one of claims 1 to 12, **characterised in that** it has a cut-off wavelength in cable less than or equal to 1.3 $\mu m$.

**14.** Fibre according to one of claims 1 to 13, **characterised in that** it has, for wavelengths between 1300 and 1620 nm, bending losses less than 0.05 dB, and preferably less than $5 \times 10^{-3}$ dB.

**15.** Fibre according to one of claims 1 to 14, **characterised in that** the difference between the index at every point of the fibre and the index of the cladding is greater than or equal to $-8 \times 10^{-3}$.

**16.** Fibre according to one of claims 1 to 15, **characterised in that** the difference between the index at every point of the fibre and the index of the cladding is less than or equal to $28 \times 10^{-3}$, and preferably less than or equal to $20 \times 10^{-3}$.

**17.** Fibre according to claim 1, **characterised in that** said central portion (10), of radius $r_1$, has the shape of a rectangle; and **in that** its difference in index $\Delta n_1$ from said cladding (13) is substantially constant.

**18.** Fibre according to claim 1, **characterised in that** said central portion (10') has the shape of a trapezium, of minimum radius $r_{1a}$ and of maximum radius $r_{1b}$ and the radius of which at the point where it crosses the axis of the abscissa is denoted $r_1$.

**19.** Fibre according to claim 1, **characterised in that**, S being defined by: $S = 2x \int_0^{+r_1} \Delta n(r) \cdot r dr,$ it satisfies the following relations:

$$55.6 \times 10^{-3} \ \mu m^2 \leq S \leq 84.6 \times 10^{-3} \ \mu m^2$$

$$-319 \times 10^{-3} \ \mu m^2 \leq (r_2)^2 x \Delta n_2 \leq -157 \times 10^{-3} \ \mu m^2$$

$$6.9 \times 10^{-3} \ \mu m \leq (r_3 - r_2) x \Delta n_3 \leq 14.75 \times 10^{-3}$$

**20.** Use of a fibre according to one of claims 1 to 19 as dispersion-compensating fibre in a wavelength multiplexing optical fibre transmission system.

21. Use according to claim 20, the compensating fibre being cabled and used as line fibre.

22. Wavelength multiplexing optical fibre transmission system comprising a first section (3) of line fibre, and a second section (4) of line fibre according to one of claims 1 to 19.

23. System according to claim 22, **characterised in that** the line fibre of the first section has, for a wavelength of 1550 nm, a chromatic dispersion between 5 and 11 ps/nm.km.

24. System according to one of claims 22 or 23, **characterised in that** the line fibre of the first section has, for a wavelength of 1550 nm, a chromatic dispersion slope less than or equal to 0.08 ps/nm$^2$.km.

25. System according to one of claims 22 to 24, **characterised in that** the ratio of the length of the first section to the length of the second section is substantially the inverse of the absolute value of the ratio of the chromatic dispersions, at 1550 nm, of the fibres of the first section and of the second section.

26. System according to one of claims 22 to 25, **characterised in that** the cumulative chromatic dispersion for each channel between 1530 and 1620 nm is less than 100 ps/nm, and preferably less than 50 ps/nm, averaged over 100 km of transmission.

**Patentansprüche**

1. Optische Faser umfassend einen Kern umgeben durch eine optische Hülle, welcher Kern ein Indexprofil hat mit einem vertieften Bereich und einem Ring und mit einer für eine Wellenlänge von 1550 nm chromatischen Dispersion, welche negativ und größer als -40 ps/nm•km ist, Verlusten durch Krümmung, welche kleiner oder gleich 0,05 dB sind, einer effektiven Fläche, welche größer oder gleich 10 $\mu$m$^2$ ist, einer theoretische Cut-Off-Wellenlänge, welche größer oder gleich 1,1 $\mu$m ist, und einem Verhältnis zwischen der chromatischen Dispersion und der Steigung der chromatischen Dispersion, welches zwischen 50 und 230 nm enthalten ist, umfassend:

   - einen Mittelabschnitt (10, 10') mit Radius $r_1$, mit einem Index, welcher größer oder gleich dem Index der Hülle (13) ist, mit einer maximalen Indexdifferenz $\Delta n_1$ zu der Hülle (13),
   - einen tiefer liegenden oder vertieften Bereich (11) mit Radius $r_2$ mit einem Index, welcher kleiner oder gleich dem Index der Hülle (13) ist, mit einer Indexdifferenz $\Delta n_2$ zu der Hülle (13),
   - einen Ring (12) mit Radius $r_3$ mit einem Index, welcher größer als der Index der Hülle (13) ist, mit einer maximalen Indexdifferenz $\Delta n_3$ zu der Hülle (13),

   **dadurch gekennzeichnet, dass** $10 \cdot 10^{-3} \leq \Delta n_1 \leq 16 \cdot 10^{-3}$ und $1,85\ \mu m \leq r_1 \leq 2,85\ \mu m$, $-8 \cdot 10^{-3} \leq \Delta n_2 \leq -4 \cdot 10^{-3}$ und $4,8\ \mu m \leq r_2 \leq 7,25\ \mu m$, $2 \cdot 10^{-3} \leq \Delta n_3 \leq 8 \cdot 10^{-3}$ und $6,6\ \mu m \leq r_3 \leq 9,5\ \mu m$.

2. Faser nach Anspruch 1, **dadurch gekennzeichnet, dass** sie für eine Wellenlänge von 1550 nm eine chromatische Dispersion aufweist, welche größer oder gleich -20 ps/nm·km ist.

3. Faser nach Anspruch 1 oder 2, **dadurch gekennzeichnet, dass** sie für eine Wellenlänge von 1550 nm eine chromatische Dispersion aufweist, welche kleiner oder gleich -5 ps/nm·km ist.

4. Faser nach einem der Ansprüche 1-3, **dadurch gekennzeichnet, dass** sie für eine Wellenlänge von 1550 nm ein Verhältnis zwischen der chromatischen Dispersion und der Steigung der chromatischen Dispersion aufweist, welches kleiner als 200 nm und vorzugsweise kleiner als 180 nm ist.

5. Faser nach Anspruch 4, **dadurch gekennzeichnet, dass** sie für eine Wellenlänge von 1550 nm ein Verhältnis zwischen der chromatischen Dispersion und der Steigung der chromatischen Dispersion aufweist, welches kleiner als 160 nm ist.

6. Faser nach einem der Ansprüche 1 bis 5, **dadurch gekennzeichnet, dass** sie für eine Wellenlänge von 1550 nm ein Verhältnis zwischen der chromatischen Dispersion und der Steigung der chromatischen Dispersion aufweist, welches größer als 80 nm und vorzugsweise größer als 100 nm ist.

**7.** Faser nach Anspruch 6, **dadurch gekennzeichnet, dass** sie für eine Wellenlänge von 1550 nm ein Verhältnis zwischen der chromatischen Dispersion und der Steigung der chromatischen Dispersion aufweist, welches größer als 120 nm ist.

**8.** Faser nach einem der Ansprüche 1 bis 7, **dadurch gekennzeichnet, dass** sie für eine Wellenlänge von 1550 nm eine effektive Fläche aufweist, welche größer oder gleich 15 $\mu m^2$, vorzugsweise größer oder gleich 20 $\mu m^2$ ist.

**9.** Faser nach einem der Ansprüche 1 bis 8, **dadurch gekennzeichnet, dass** sie für eine Wellenlänge von 1550 nm eine Dämpfung aufweist, welche kleiner oder gleich 1 dB/km und vorzugsweise kleiner oder gleich 0,3 dB/km ist.

**10.** Faser nach einem der Ansprüche 1 bis 9, **dadurch gekennzeichnet, dass** sie für eine Wellenlänge von 1550 nm einen Modendurchmesser aufweist, welcher größer oder gleich 4 $\mu m$ und vorzugsweise größer oder gleich 5 $\mu m$ ist.

**11.** Faser nach einem der Ansprüche 1 bis 10, **dadurch gekennzeichnet, dass** sie für eine Wellenlänge von 1550 nm eine Empfindlichkeit gegenüber Mikrokrümmungen aufweist, welche kleiner oder gleich 1 und vorzugsweise kleiner oder gleich 0,5 ist.

**12.** Faser nach einem der Ansprüche 1 bis 11, **dadurch gekennzeichnet, dass** sie eine theoretische Cut-Off-Wellenlänge aufweist, welche größer oder gleich 1,3 $\mu m$ ist.

**13.** Faser nach einem der Ansprüche 1 bis 12, **dadurch gekennzeichnet, dass** sie eine Cut-Off-Wellenlänge im Kabel aufweist, welche kleiner oder gleich 1,3 $\mu m$ ist.

**14.** Faser nach einem der Ansprüche 1 bis 13, **dadurch gekennzeichnet, dass** sie für Wellenlängen zwischen 1300 und 1620 nm Verluste durch Krümmungen aufweist, welche kleiner als 0,05 dB und vorzugsweise kleiner als $5 \cdot 10^{-3}$ dB sind.

**15.** Faser nach einem der Ansprüche 1 bis 14, **dadurch gekennzeichnet, dass** die Differenz zwischen dem Index in jedem Punkt der Faser und dem Index der Hülle größer oder gleich $-8 \cdot 10^{-3}$ ist.

**16.** Faser nach einem der Ansprüche 1 bis 15, **dadurch gekennzeichnet, dass** die Differenz zwischen dem Index in jedem Punkt der Faser und dem Index der Hülle kleiner oder gleich $28 \cdot 10^{-3}$ und vorzugsweise kleiner oder gleich $20 \cdot 10^{-3}$ ist.

**17.** Faser nach Anspruch 1, **dadurch gekennzeichnet, dass** der Mittelabschnitt (10) mit Radius $r_1$ die Form eines Rechtecks aufweist und dass seine Indexdifferenz $\Delta n_1$ zu der Hülle (13) im Wesentlichen konstant ist.

**18.** Faser nach Anspruch 1, **dadurch gekennzeichnet, dass** der Mittelabschnitt (10') die Form eines Trapezes mit Minimalradius $r_{1a}$, mit Maximalradius $r_{1b}$, wobei dessen Radius in dem Punkt, wo es die Abszissenachse kreuzt, mit $r_1$ bezeichnet ist, aufweist.

**19.** Faser nach Anspruch 1, **dadurch gekennzeichnet, dass** sie die folgenden Beziehungen erfüllt:

$$55,6 \cdot 10^{-3} \ \mu m^2 \ \leq \ S \ \leq \ 84,6 \cdot 10^{-3} \ \mu m^2$$

$$-319 \cdot 10^{-3} \ \mu m^2 \ \leq \ (r_2)^2 \ \times \ \Delta n_2 \ \leq \ -157 \cdot 10^{-3} \ \mu m^2$$

$$6,9 \cdot 10^{-3} \ \mu m^2 \ \leq \ (r_3 - r_2) \ \times \ \Delta n_3 \ \leq \ 14,75 \cdot 10^{-3},$$

wobei S definiert ist durch:

$$S = 2 \times \int_0^{r_1} \Delta n(r) \cdot r\, dr.$$

**20.** Verwendung einer Faser nach einem der Ansprüche 1 bis 19 als Faser zur Dispersionskompensation in einem faseroptischen Übertragungssystem mit Wellenlängenmultiplexing.

**21.** Verwendung nach Anspruch 20, wobei die Kompensationsfaser verkabelt ist und als Leitungsfaser verwendet wird.

**22.** Faseroptisches Übertragungssystem mit Wellenlängenmultiplexing, umfassend einen ersten Abschnitt (3) mit einer Leitungsfaser und einen zweiten Abschnitt (4) mit einer Leitungsfaser nach einem der Ansprüche 1 bis 19.

**23.** System nach Anspruch 22, **dadurch gekennzeichnet, dass** die Leitungsfaser des ersten Abschnitts für eine Wellenlänge von 1550 nm eine chromatische Dispersion zwischen 5 und 11 ps/nm·km aufweist.

**24.** System nach Anspruch 22 oder 23, **dadurch gekennzeichnet, dass** die Leitungsfaser des ersten Abschnitts für eine Wellenlänge von 1550 nm eine Steigung der chromatischen Dispersion aufweist, welche kleiner oder gleich 0,08 ps/nm$^2$·km ist.

**25.** System nach einem der Ansprüche 22 bis 24, **dadurch gekennzeichnet, dass** das Verhältnis der Länge des ersten Abschnitts zu der Länge des zweiten Abschnitts im Wesentlichen der Kehrwert des Absolutwerts von dem Verhältnis der chromatischen Dispersionen bei 1550 nm der Fasern des ersten Abschnitts und des zweiten Abschnitts ist.

**26.** System nach einem der Ansprüche 22 bis 25, **dadurch gekennzeichnet, dass** die für jeden Kanal zwischen 1530 und 1620 nm kumulierte chromatische Dispersion im Mittel über 100 km Übertragung kleiner als 100 ps/nm und vorzugsweise kleiner als 50 ps/nm ist.

FIG_1

FIG_3

FiG. 2